# EUROPEAN PATENT APPLICATION

(11) **EP 1 271 833 A1**
(43) Date of publication of application: **02.01.2003**
(21) Application number: 02003923.6
(22) Date of filing: 21.02.2002
(51) Int. Cl.: H04L 1/18, H04L 1/00

(54) **ARQ system with transmission priority and receiver quality feedback**

(30) Priority: 22.06.2001 JP 2001189536
(71) Applicant: MITSUBISHI DENKI KABUSHIKI KAISHA, Tokyo 100-8310 (JP)
(72) Inventor: Yamaguchi, Nobuyasu, Mitsubishi Denki Kabushiki K., Tokyo 100-8310 (JP); Abe, Minoru, Mitsubishi Denki Kabushiki Kaisha, Tokyo 100-8310 (JP); Takano, Michiaki, Mitsubishi Denki Kabushiki K., Tokyo 100-8310 (JP); Suzuki, Kuniyuki, Mitsubishi Denki Kabushiki K., Tokyo 100-8310 (JP); Duan, Jinsong, Mitsubishi Denki Kabushiki Kaisha, Tokyo 100-8310 (JP); Fujihara, Nobuo, Mitsubishi Denki Kabushiki Kaisha, Tokyo 100-8310 (JP); Yamazaki, Takuya, Mitsubishi Denki Kabushiki K., Tokyo 100-8310 (JP)
(74) Representative: Bohnenberger, Johannes, Dr.

(57) **Abstract**

In a transmitter (1) constituting a communication system, a buffer/transmission data disassembly unit (10) disassembles a transmission packet into a plurality of blocks, an error detection coding unit (11) attaches an error detection code to each of the blocks, and a transmitting unit (13) transmits the blocks having the error detection code attached and retransmits a designated block designated by retransmission information from a receiver. In a receiver (2), a receiving unit (15) receives blocks from the transmitter, an error detection unit (17) detects an error in the received block, an ARQ control information generating unit (19) generates information relating to retransmission of the received block, and a buffer/received data assembly unit (18) recovers a data packet by combining a plurality of blocks. Improvement in transmission efficiency is attained.

## Description

### BACKGROUND OF THE INVENTION

### 1. Field of the Invention

The present invention generally relates to transmitters, receivers, transmitter-receivers, and communication systems and, more particularly, to a transmitter, a receiver, a transmitter-receiver and a communication system capable of automatic retransmission in packet communication in a mobile wireless system.

### 2. Description of the Related Art

In a mobile wireless communication environment, the status of a transmission path undergoes variation due to phenomenon such as facing that is inherent in mobile communication. In order to compensate for an error occurring on a transmission path, forward error correction (FEC) or automatic repeat request (ARQ) is used.

In FEC, a data packet to be transmitted is encoded by appending redundant bits. On the receiving end, the redundant bits are used to correct coding errors. In ARQ, ARQ control information indicating whether a packet is received error free or contains an error is returned to the transmitting end via a reverse channel. When the packet is error free, an ACK signal indicating normal reception is returned. When the packet contains an error, a NACK signal indicating abnormal reception is returned. When the NACK signal is returned, a signal error is suppressed by causing the transmitting end to retransmit the same packet.

In multimedia communication carrying not only voice but also data and moving pictures, a high quality of service (QoS) adapted for a type of transmission is required. For example, the requirement may concern guaranteed bandwidth, quality of transmission line and delay time adapted for a transmission medium. A measure of the quality of transmission line is provided by a bit error rate (BER). In multimedia transmission, a wireless environment with an extremely low BER of 10⁻⁶ is necessary. Coding gain, obtained as a result of FEC, does not meet the low BER requirement alone. In ARQ, transmission is repeated until it is ensured that the reception is successful. Therefore, reliable communication is ensured if at the risk of experiencing a problem of delay when retransmission occurs frequently. An approach known as hybrid-ARQ (H-ARQ) in which FEC and ARQ are mixed is also available.

FEC is an effective error control technique to improve the quality of transmission line. However, since a large number of redundant bits are appended to a transmission data packet to accomplish a required BER, the efficiency of transmission is reduced when an error rarely occurs on a transmission path, i.e., when a signal to interference noise power ratio (SIR) is relatively large.

In a multimedia communication, especially of a type carrying voice and some types of moving pictures, continuity is an important factor. In the communication of this type, real-time performance, i.e., transmission with a small delay time, is desired. The size of transmission data packet may grow to such an extent that, according to the related-art H-ARQ technology, a significant amount of delay may be caused as a result of retransmission. When the error rate becomes high and retransmission occurs frequently, the delay time may increase to such an extent that a transmission data packet is considered as being lost.

### SUMMARY OF THE INVENTION

Accordingly, an object of the present invention is to provide a transmitter, a receiver, a transmitter-receiver and a communication system in which the aforementioned problems are eliminated.

Another and more specific object is to provide a transmitter, a receiver, a transmitter-receiver and a communication system in which a high transmission efficiency is maintained and an increase in delay time is prevented.

The aforementioned objects are achieved by a transmitter comprising: packet disassembly means for disassembling a transmission data packet into a plurality of blocks; error detection code attaching means for attaching an error detection code to each of the blocks; and transmitting means for transmitting the blocks having the error detection code attached and re-transmitting designated blocks designated by retransmission information from an outside source.

Thus, according to this aspect of the invention, a packet is disassembled in a transmitter into a plurality of blocks and an error detection code is appended to each of the blocks. In a receiver, block-by-block error detection is performed and retransmission information is created block by block so that only those blocks that contain an error are retransmitted. Accordingly, retransmission of blocks that do not contain an error is avoided so that the efficiency in transmission is improved.

The transmitter may further comprise:
prioritizing means for attaching an order of priority to each of the blocks produced by the packet disassembly means; and coding means coding the blocks having the error detection code attached, by employing an error correction coding method compatible with the order of priority, before supplying the blocks to the transmitting means.

According to this aspect of the invention, the order of priority is given to each of the disassembled blocks so that error correction coding compatible with the order of priority is performed. Therefore, error correction is enhanced in desired blocks.

The aforementioned objects are also achieved by a receiver comprising: receiving means receiving blocks produced by disassembling a data packet; error detecting means for detecting an error in the received block; retransmission information generating means for generating information relating to retransmission of the received block in accordance with a result of error detection by the error detecting means; and packet recovering means for recovering the data packet by combining a plurality of received blocks.

According to this aspect of the invention, block-by-block error detection is performed in a receiver and retransmission information is created block by block. Thereby, the efficiency in transmission is improved.

The receiver may further comprise:
transmission path status estimating means for estimating a status of a transmission path for transmitting the blocks; and process information generating means for generating process information requesting processes compatible with a result of estimation by the transmission path status estimating means.

According to this aspect of the invention, the status of the transmission path is estimated so that the transmitter is requested to perform compatible processes in retransmission. The associated process settings in the transmitter 1 are changed accordingly. Thus, in retransmission, the transmitter is operated using the process setting that prevents an error from being detected again. Thereby, repetition of retransmission is prevented.

The receiver may further comprise: error correcting means subjecting the received block from the receiving means to an error correction process and outputting the received block subjected to the error correction process to the error detecting means, wherein the transmission path status estimating means estimates the status of the transmission path, based on at least one of a signal to interference noise power ratio (SIR) of a received signal detected by the receiving means, and a re-encoding error rate calculated by the error correcting means.

By using a reception SIR and a re-encoding error rate, which reflect the condition of the transmission path properly, as parameters for estimation, it is ensured that a change in the associated process settings in the transmitter is executed properly. Thereby, the likelihood of the retransmission being repeated is further reduced.

The retransmission information generating means and the process information generating means may form integral information generating means for generating an index code including retransmission information and process information, the index code being mapped into a combination of an indication of a need or a lack thereof for retransmission, and a requirement for processes related to retransmission.

By generating the index code corresponding to predetermined combinations of the retransmission information and the process information referred to in retransmission, the result of transmission path status estimation in the receiver is used in the transmitter so that the process in the transmitter is simplified. Since it is not necessary for the receiver to send substantive information such as a retransmission command and a process request command, the efficiency of transmission is improved.

The information generating means may be provided with a table that maps index codes into combinations of an indication of a need or a lack thereof for retransmission, and a requirement for processes related to retransmission, so that the index code is generated using the table.

According to this aspect of the invention, the conversion operation in the ARQ control information generating unit 42 is simplified.

The information generating means may be provided with a table defined for each of different types of transmission.

With this, an indication of a need or a lack thereof for retransmission, and a requirement for transmitter process(es) are provided to the transmitter when different QoS requirements exist for different types of transmission.

The aforementioned objects are also achieved by a transmitter-receiver comprising a transmitter and a receiver, the transmitter comprising: packet disassembly means for disassembling a transmission data packet into a plurality of blocks; error detection code attaching means for attaching an error detection code to each of the blocks; and transmitting means for transmitting the blocks having the error detection code attached and re-transmitting designated blocks designated by retransmission information from an outside source, and the receiver comprising: receiving means receiving blocks produced by disassembling a data packet; error detecting means for detecting an error in the received block; retransmission information generating means for generating information relating to retransmission of the received block in accordance with a result of error detection by the error detecting means; and packet recovering means for recovering the data packet by combining a plurality of received blocks.

According to this aspect of the invention, the efficiency of transmission is improved.

The aforementioned objects are also achieved by a communication system comprising a transmitter and a receiver, the transmitter comprising: packet disassembly means for disassembling a transmission data packet into a plurality of blocks; error detection code attaching means for attaching an error detection code to each of the blocks; and transmitting means for transmitting the blocks having the error detection code attached and re-transmitting designated blocks designated by retransmission information from an outside source, and the receiver comprising: receiving means receiving blocks produced by disassembling a data packet; error detecting means for detecting an error in the received block; retransmission information generating means for generating information relating to retransmission of the received block in accordance with a result of error detection by the error detecting means; and packet recovering means for recovering the data packet by combining a plurality of received blocks.

This aspect of the invention also provides improvement in the efficiency of transmission.

### BRIEF DESCRIPTION OF THE DRAWINGS

Other objects and further features of the present invention will be apparent from the following detailed description when read in conjunction with the accompanying drawings, in which:
Fig. 1 is a block diagram showing a communication system according to a first embodiment of the present invention;
Fig. 2 shows disassembly of a transmission data packet into blocks;
Fig. 3 is a block diagram showing a communication system according to a second embodiment of the present invention;
Fig. 4 shows a table listing index codes; and
Fig. 5 is a block diagram showing a communication system according to a third embodiment of the present invention.

### DESCRIPTION OF THE PREFERRED EMBODIMENTS

### First embodiment

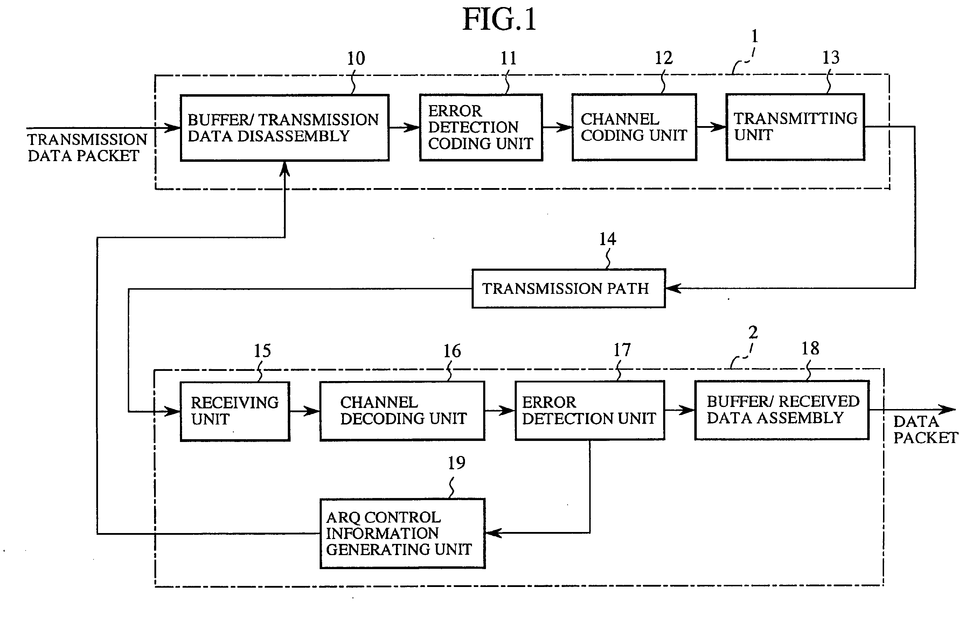

Fig. 1 is a block diagram showing a communication system according to a first embodiment of the present invention. The communication system comprises a transmitter 1 and a receiver 2. The communication system according to the first embodiment is suitably used for down-link transmission in a mobile wireless communication system. That is, the transmitter 1 is used in a base station and the receiver 2 is used in a mobile terminal.

The transmitter 1 comprises a buffer/transmission data disassembly unit 10 for disassembling a transmission data packet into a plurality of blocks, an error detection coding unit 11 for appending an error detection code to the transmission data packet, a channel coding unit 12 for FEC coding and interleaving process and a transmitting unit 13 for transmitting data via a transmission path 14. The receiver 2 comprises a receiving unit 15 for receiving data transmitted via the transmission path 14, a channel decoding unit 16 for de-interleaving and error correction process, an error detection unit for block-by-block error detection, a buffer/received data assembly unit 18 for recovering packet data by linking a plurality of blocks and an ARQ control information generating unit 19 for generating ARQ information.

A description will now be given of the operation according to the first embodiment.

The transmission data packet is input to the buffer/transmission data disassembly unit 10. The buffer/transmission data disassembly unit 10 disassembles a packet into a total of n transmission blocks. A unique word (UW) for identifying each transmission block and controlling a sequence of transmission is appended to each transmission block. The blocks thus produced are stored and output sequentially. The transmission blocks output from the buffer are supplied to the error detection coding unit 11. The error detection coding unit 11 appends an error detection code to the transmission blocks so that the receiver 2 could detect an error. A cyclic redundancy check (CRC) code is used as an error detection code. The transmission blocks output from the error detection coding unit 11 are supplied to the channel coding unit 12. The channel coding unit 12 performs FEC coding and an interleaving process. For FEC coding, convolution codes, Turbo codes or Reed-Solomon (RS) codes may be used. The transmission data blocks output from the channel coding unit 12 are supplied to the transmitting unit 13. In the transmitting unit 13, the transmission blocks are subject to a modulating process and conversion into a radio frequency before being output to the transmitted path 14.

The blocks transmitted via the transmission path 14 are received by the receiving unit 15. The receiving unit 15 performs frequency conversion so that the radio frequency signal is converted into a base band signal. The receiving unit 15 also performs a demodulating process. The received blocks output from the receiving unit 15 are supplied to the channel decoding unit 16. The channel decoding unit 16 performs de-interleaving and error correction in the received blocks. Errors are corrected to the full capacity of the channel decoding unit 16. The received blocks output from the channel coding unit 16 are supplied to the error detection unit 17. The error detection unit 17 detects any errors that may be still present in the received blocks subjected to the examination and the error correction process in the channel decoding unit 16. The blocks output from the error detection unit 17 are supplied to the buffer/received data assembly unit 18 and temporarily stored therein. The error detection unit 17, having examined the blocks, outputs to the ARQ control information generating unit 19 an indication as to whether there is an error included in each block. The ARQ control information generating unit 19 generates retransmission information in accordance with the result of examination by the error detection unit 17. The retransmission information is returned to the transmitter 1 via a reverse channel. When there is no error, an ACK signal is returned indicating that the reception is successful. When there is an error, a NACK signal is returned indicating that the reception is not successful.

The block-by-block retransmission information returned from the receiver 2 to the transmitter 1 is input to the buffer/transmission data disassembly unit 10 of the transmitter 1. When the NACK signal is returned as the retransmission information, the corresponding packet is output from the buffer/transmission data disassembly unit 10 to the error detection coding unit 11 for a second time. The block is then transmitted over the transmission path 14 via the channel coding unit 12 and the transmission unit 13.

When the entire blocks constituting a packet are properly stored in the buffer/received data assembly unit 18 in the receiver 2, the blocks are rearranged in a proper order by linking the blocks using the unique words. That is, the packet prior to disassembly in the transmitter 1 is recovered.

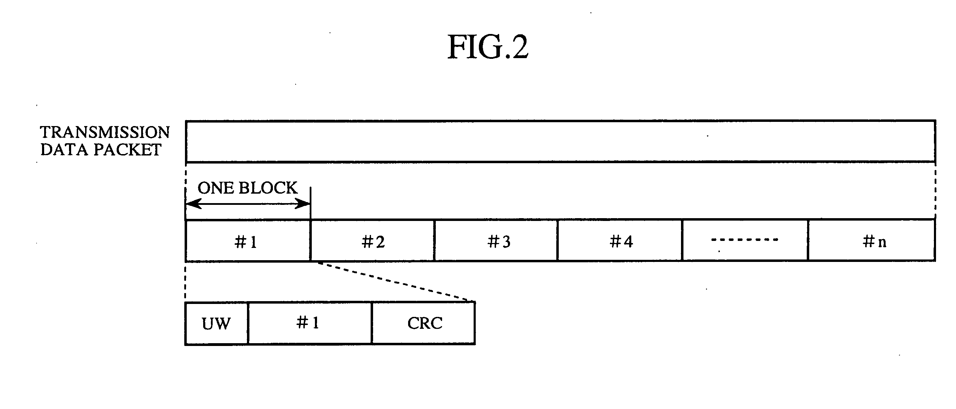

Fig. 2 shows how a transmission data packet is disassembled into blocks. The transmission data packet is disassembled into a total of n blocks. A unique word (UW) for identifying each transmission block and controlling a transmission sequence and a cyclic redundancy check (CRC) code are appended to each block.

Thus, according to the first embodiment, the packet is disassembled in the transmitter 1 into a plurality of blocks and an error detection code is appended to each of the blocks. In the receiver 2, block-by-block error detection is performed and retransmission information is created block by block so that only those blocks that contain an error are retransmitted. Accordingly, retransmission of blocks that do not contain an error is avoided so that the efficiency in transmission is improved.

The description given above assumes a communication system in which only a single transmitter 1 and a single receiver 2 are in an end-to-end arrangement. Alternatively, two transmitter-receivers 2 each having the transmitter 1 and the receiver 2 integrated therein may be provided at respective ends. With this, bidirectional data transmission is enabled.

### Second embodiment

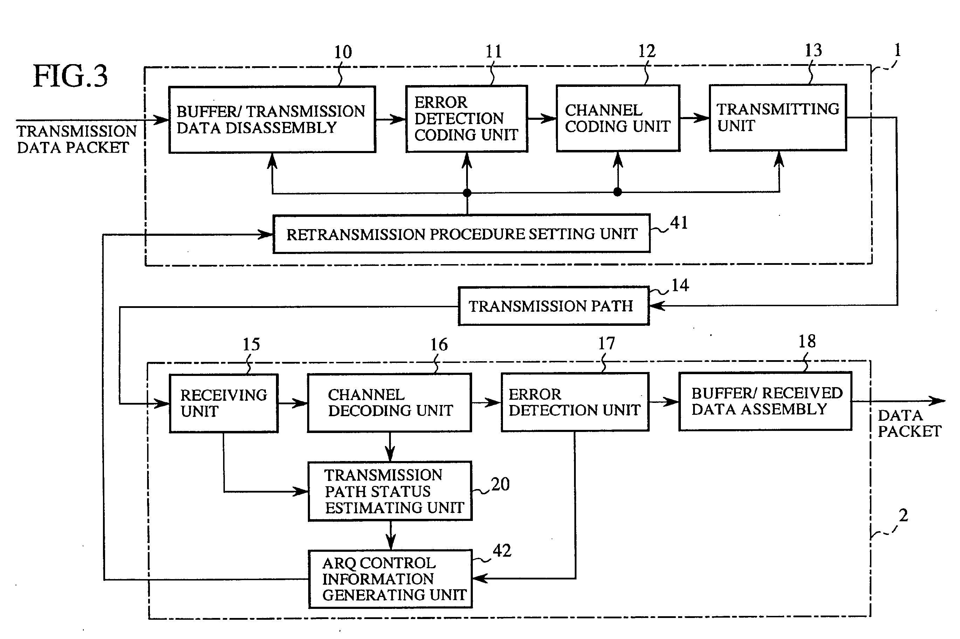

Fig. 3 is a block diagram showing a communication system according to a second embodiment of the present invention. In the communication system according to the second embodiment, the ARQ control information generating unit 19 of the receiver 2 of the first embodiment is replaced by the ARQ control information generating unit 42. A transmission status estimating unit 20 is introduced in the receiver 2. A retransmission procedure setting unit 41 is introduced in the transmitter 1. In addition to the function, provided in the ARQ control information generating unit 19, of generating retransmission information, the ARQ control information generating unit 42 is provided with the function of generating process information indicating processes required in the transmitter 1. The transmission path status estimating unit 20 estimates the status of communication occurring on the transmission path 14, based on the output from the receiving unit 15 and the output from the channel decoding unit 16. The retransmission procedure setting unit 41 gives instructions to the buffer/transmission data disassembly unit 10, the error detection coding unit 11, the channel coding unit 12 and the transmitting unit 13, based on the information from the ARQ control information generating unit 42. Those elements of the system according to the second embodiment that are identical to the corresponding elements of the first embodiment are designated by the same reference numerals so that the description thereof is omitted.

A description will now be given of the operation according to the second embodiment.

A transmission data packet is input to the buffer/transmission data disassembly unit 10. The buffer/transmission data disassembly unit 10 disassembles a packet into a total of n transmission blocks. A unique word for identifying each transmission block and controlling a sequence of transmission is appended to each transmission block. The blocks thus produced are stored and output sequentially. The transmission blocks output from the buffer are supplied to the error detection coding unit 11. The error detection coding unit 11 appends an error detection code to the transmission blocks so that the receiver 2 could detect an error. A cyclic redundancy check (CRC) code is used as an error detection code. The transmission blocks output from the error detection coding unit 11 are supplied to the channel coding unit 12. The channel coding unit 12 performs FEC coding and an interleaving process. For FEC coding, any of convolution codes, Turbo codes or Reed-Solomon (RS) codes may be used. The transmission data blocks output from the channel coding unit 12 are supplied to the transmitting unit 13. In the transmitting unit 13, the transmission blocks are subject to a modulating process and conversion into a radio frequency before being output to the transmitted path 14.

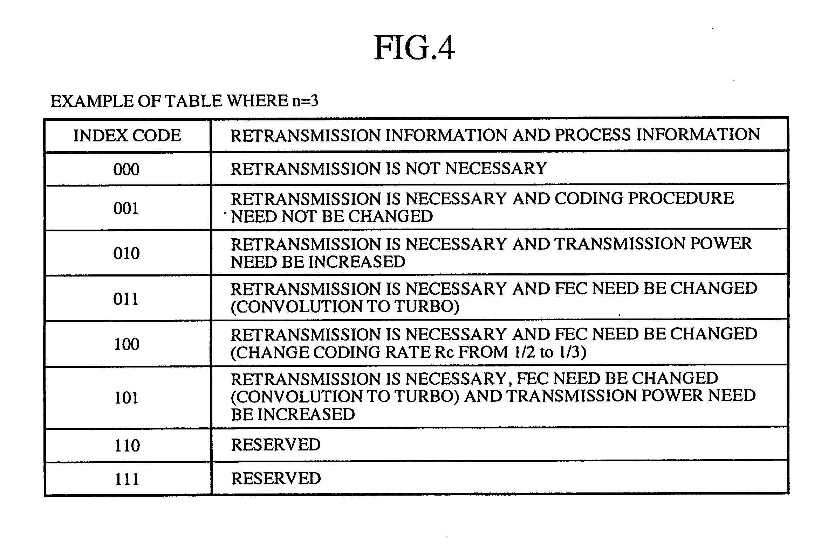

The blocks transmitted via the transmission path 14 are received by the receiving unit 15. The receiving unit 15 performs frequency conversion so that the radiofrequency signal is converted into a base band signal and also performs a demodulating process. The receiving unit 15 examines the received signal to detect a reception SIR and outputs the SIR to the transmission path status estimating unit 20. The received blocks output from the receiving unit 15 are supplied to the channel decoding unit 16. The channel decoding unit 16 performs de-interleaving and error correction in the received blocks. Errors are corrected to the full capacity of the channel decoding unit 16. The channel decoding unit 16 re-encodes a block subjected to error correction using the same coding scheme as used in the channel coding unit 12. A comparison is made between the block supplied from the receiving unit 15 and the block subjected to re-encoding so as to calculate a re-encoding error rate, which is output to the transmission path status estimating unit 20. The re-encoding error rate indicates a ratio of the number of bits in error to the total number of bits constituting the block. The received blocks output from the channel decoding unit 16 are supplied to the error detection unit 17. The error detection unit 17 detects any errors that may be still present in the received blocks subjected to the examination and the error correction process in the channel decoding unit 16. The blocks output from the error detection unit 17 are supplied to the buffer/received data assembly unit 18 and temporarily stored therein. The error detection unit 17, having examined the blocks, outputs to the ARQ control information generating unit 42 an indication as to whether there is an error included in each of the blocks. The transmission path status estimating unit 20 estimates the status of the transmission path, using at least one of the reception SIR supplied from the receiving unit 15 and the re-encoding error rate supplied from the channel decoding unit 16. The ARQ control information generating unit 42 generates combination information by combining retransmission information related to the presence or absence of an error, and process information related to the status of the transmission path. The combined information is returned to the transmitting unit 1 via a reverse channel. The combined information generated by the ARQ control information generating unit 42 is an index code comprising a total of n bits (n≥2). An n-bit index code corresponds to a corresponding one of a total of 2ⁿ combinations of the retransmission information and the process information. As shown in Fig. 4, the ARQ control information generating unit 42 is provided with a table that maps index codes into respective combinations of the retransmission information and the process information. The index code is generated according to the table. The generated index code is returned to the transmitting unit 1 via a reverse channel.

The block-by-block index code returned from the receiver 2 to the transmitter 1 is input to the retransmission procedure setting unit 41 of the transmitter 1. The retransmission procedure setting unit 41 is provided with a table similar to the table provided in the ARQ control information generating unit 42 of the receiver 2. The retransmission procedure setting unit 41 provides instructions, requesting processes compatible with the received index code, to the buffer/transmission data disassembly unit 10, the error detection coding unit 11, the channel coding unit 12 and the transmitting unit 13. The buffer/transmission data disassembly unit 10, the error detection coding unit 11, the channel coding unit 12 and the transmitting unit 13 change associated process settings, in accordance with the instructions.

When the entire blocks constituting a packet are properly stored in the buffer/received data assembly unit 18 in the receiver 2, the blocks are rearranged in a proper order by linking the blocks using the unique words. That is, the packet prior to disassembly in the transmitter 1 is recovered.

Fig. 4 shows a table listing index codes. An index code "000" corresponds to a combination of the retransmission information indicating that the block retransmission is unnecessary and the process information indicating that no change in the process setting is requested (not mentioned in the table). When the index code "000" is returned to the transmitter 1, the retransmission procedure setting unit 41 gives an ACK signal indicating that the reception is successful to the buffer/transmission data disassembly unit 10. The buffer/transmission data disassembly unit 10 receiving the ACK signal does not do anything particular.

An index code "001" corresponds to a combination of the retransmission information indicating that the block needs retransmission and the process information indicating that no change in the process setting is requested (the table specifies that no change in the encoding means is necessary). When the index code "001" is returned to the transmitter 1, the retransmission procedure setting unit 41 gives a NACK signal indicating that the reception is not successful to the buffer/transmission data disassembly unit 10 and does not give any other instructions. The buffer/transmission data disassembly unit 10 outputs the block a second time to the error detection coding unit 11. In this way, the block not properly received is retransmitted.

An index code "010" corresponds to a combination of the retransmission information indicating that the block retransmission is necessary and the process information requesting the transmission power to be raised. When the index code "010" is returned to the transmitter 1 the retransmission procedure setting unit 41 gives a NACK signal to the buffer/transmission disassembly unit 10 and requests the transmitting unit 13 to raise the transmission power.

An index code "011" corresponds to a combination of the retransmission information indicating that the block retransmission is necessary and the process information requesting the FEC coding setting to be changed from the convolution coding to the Turbo coding. When the index code "011" is returned to the transmitter 1, the retransmission procedure setting unit 41 gives a NACK signal to the buffer/transmission data disassembly unit 10 and requests the error detection coding unit 11 and the channel coding unit 12 to change their FEC coding settings from the convolution coding to the Turbo coding.

An index code "100" corresponds to a combination of the retransmission information indicating that the block retransmission is necessary and the process information requesting the FEC coding rate Rc from 1/2 to 1/3. When the index code "100" is returned to the transmitter 1, the retransmission procedure setting unit 41 gives a NACK signal to the buffer/transmission data disassembly unit 10 and requests the error detection coding unit 11 and the channel coding unit 12 to change their setting relating to the FEC coding rate.

An index code "101" corresponds to a combination of the retransmission information indicating that the block retransmission is necessary and the process information requesting the FEC coding setting to be changed from the convolution coding to the Turbo coding and also requesting the transmission power to be increased. When the index code "101" is returned to the transmitter 1, the retransmission procedure setting unit 41 gives a NACK signal to the buffer/transmission data disassembly unit 10, requests the error detection coding unit 11 and the channel coding unit 12 to change their FEC coding setting and requests the transmitting unit 13 to increase the transmission power.

A table entry "Reserved" for the index codes "110" and "111" means that these index codes are not used. However these codes may be used for other combinations of the retransmission information and the process information.

According to the second embodiment, the status of the transmission path 14 is estimated so that the transmitter 1 is requested to perform compatible processes in retransmission. The associated process settings in the transmitter 1 are changed accordingly. Thus, in retransmission, the transmitter 1 is operated using the process settings that prevent an error from being detected again. Thereby, repetition of retransmission is prevented.

By using the reception SIR and the re-encoding error rate, which reflect the condition of the transmission path properly, as parameters for estimation, it is ensured that the change in the associated process settings in the transmitter 1 is executed properly. Thereby, the likelihood of the retransmission being repeated is further reduced.

By generating the index code corresponding to predetermined combinations of the retransmission information and the process information referred to in retransmission, the result of transmission path status estimation in the receiver 2 is used in the transmitter 1 so that the process in the transmitter 1 is simplified. Since it is not necessary for the receiver 2 to send substantive information such as a retransmission command and a process request command, the efficiency of transmission is improved.

The index code is generated using a table that maps index codes into combinations of an indication of a need or a lack thereof for retransmission, and a requirement for transmitter process(es), which indication and requirement should be provided to the transmitter 1 in accordance with the result of estimation by the transmission path status estimating unit 20. Therefore, the conversion operation in the ARQ control information generating unit 42 is simplified.

The table like that of Fig. 4 may be provided for each of different types of transmission including voice transmission and moving picture transmission. With this, an indication of a need or a lack thereof for retransmission, and a requirement for transmitter process(es) are provided to the transmitter in association with different QoS requirements that arise for different types of transmission.

### Third embodiment

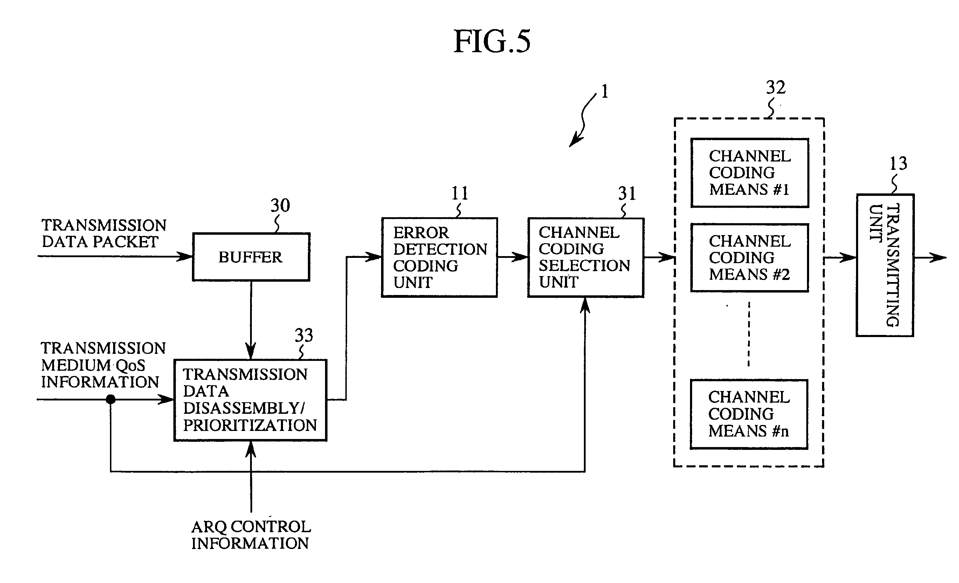

Fig. 5 is a block diagram showing a communication system according to a third embodiment of the present invention. The communication system comprises the transmitter 1 and the receiver (not shown). The transmitter 1 is provided with a buffer 30, an error detection coding unit 11, a channel coding selection unit 31, a channel coding unit 32, a transmission data disassembly/prioritizing unit 33 and a transmitting unit 13.

A description will now be given of the operation according to the third embodiment.

A transmission data packet is temporarily stored in the buffer 30 and sequentially provided to the transmission data disassembly/prioritizing unit 33. The transmission data disassembly/prioritizing unit 33 disassembles the transmission data packet into a plurality of blocks. The transmission data disassembly/prioritizing unit 33 receives QoS information defined for each of different types of transmission from an external source. The order of priority is attached to the block based on the QoS information. For example, in the case of voice transmission, the QoS requirement is that data loss is 20% at maximum. 80% of the blocks at the head of the packet are given the top priority and the remaining 20% blocks are given the second priority. The blocks subjected to disassembly and prioritizing in the transmission data disassembly/prioritizing 33 are supplied to the error detection coding unit 11. The error detection coding unit 11 appends an error detection code so that an error is detected in the receiver 2. For error detection, cyclic redundancy codes are used. The transmission blocks output from the error detection coding unit 11 are input to the channel coding selection unit 31.

The channel coding unit 32 is provided with a plurality of channel coding means. The channel coding selection unit 31 receives the QoS information defined for a transmission type so as to select a channel coding means compatible with the QoS of the transmission data. For example, the channel coding means may perform Turbo coding, concatenated coding and convolution coding in response to designation of the top priority, the second priority and the third priority, respectively. A concatenated code is a concatenation of an RS code (outer code) and a convolution code (inner code). For a block with the top priority, the channel coding means for performing Turbo coding is selected. For a block with the second priority, the channel coding means for performing concatenated coding is selected. For a block with the third priority, the channel coding means for performing convolution coding is performed. The blocks subjected to encoding and interleaving by the channel coding means compatible with the order of priority are supplied from the channel coding unit 32 to the transmitting unit 13. The transmitting unit 13 performs modulation and frequency conversion so as to produce a radio frequency signal, which is then output to the transmission path 14.

When the ARQ control information from the receiver 2 indicates retransmission, the block requested for retransmission is output from the transmission data disassembly/prioritizing unit 33 to the error detection coding unit 11. The block is then retransmitted via the channel coding selection unit 31, the channel coding unit 32 and the transmitting unit 13.

The QoS information defined for a transmission type is transmitted from the transmitter 1 to the receiver via a control channel. The receiver is provided with the channel decoding unit comprising a plurality of channel decoding means corresponding to the plurality of channel coding means of the channel coding unit 32. The channel decoding means is selected in accordance with the QoS information. For example, for a block encoded using a convolution code, the channel decoding means capable of error correction corresponding to the convolution coding is selected.

According to the third embodiment, the order of priority is given to each of the disassembled blocks so that error correction coding compatible with the order of priority is performed. Therefore, error correction is enhanced in desired blocks. One of the most important advantages deriving from this is that the QoS, including real-time performance required in voice transmission, is properly satisfied.

The present invention is not limited to the above-described embodiments, and variations and modifications may be made without departing from the scope of the present invention.

## Claims

1. A transmitter (1) **characterized by** comprising:
packet disassembly means (10) for disassembling a transmission data packet into a plurality of blocks;
error detection code attaching means (11) for attaching an error detection code to each of the blocks; and
transmitting means (13) for transmitting the blocks having the error detection code attached and re-transmitting designated blocks designated by retransmission information from an outside source.

2. The transmitter according to claim 1, **characterized by** further comprising:
prioritizing means (33) for attaching an order of priority to each of the blocks produced by the packet disassembly means; and
coding means (12) coding the blocks having the error detection code attached, by employing an error correction coding method compatible with the order of priority, before supplying the blocks to the transmitting means.

3. A receiver (2) **characterized by** comprising:
receiving means (15) receiving blocks produced by disassembling a data packet;
error detecting means (17) for detecting an error in the received block;
retransmission information generating means (19) for generating information relating to retransmission of the received block in accordance with a result of error detection by said error detecting means; and
packet recovering means (18) for recovering the data packet by combining a plurality of received blocks.

4. The receiver according to claim 3, **characterized by** further comprising:
transmission path status estimating means (20) for estimating a status of a transmission path for transmitting the blocks; and
process information generating means (42) for generating process information requesting processes compatible with a result of estimation by said transmission path status estimating means.

5. The receiver according to claim 4, **characterized by** further comprising:
error correcting means (16) subjecting the received block from said receiving means to an error correction process and outputting the received block subjected to the error correction process to said error detecting means, **characterized in that**
said transmission path status estimating means estimates the status of the transmission path, based on at least one of a signal to interference noise power ratio (SIR) of a received signal detected by said receiving means, and a re-encoding error rate calculated by said error correcting means.

6. The receiver according to claim 4 or claim 5, **characterized in that** said retransmission information generating means and said process information generating means form integral information generating means (42) for generating an index code including retransmission information and process information, the index code being mapped into a combination of an indication of a need or a lack thereof for retransmission, and a requirement for processes related to retransmission.

7. The receiver according to claim 6, **characterized in that** said information generating means is provided with a table that maps index codes into combinations of an indication of a need or a lack thereof for retransmission, and a requirement for processes related to retransmission, and **characterized in that**
the index code is generated using the table.

8. The receiver according to claim 7, **characterized in that** said information generating means is provided with a table defined for each of different types of transmission.

9. A transmitter-receiver (1, 2) comprising a transmitter (1) and a receiver (2), said transmitter comprising:
packet disassembly means (10) for disassembling a transmission data packet into a plurality of blocks;
error detection code attaching means (11) for attaching an error detection code to each of the blocks; and
transmitting means (13) for transmitting the blocks having the error detection code attached and re-transmitting designated blocks designated by retransmission information from an outside source, and said receiver comprising:
receiving means (15) receiving blocks produced by disassembling a data packet;
error detecting means (17) for detecting an error in the received block;
retransmission information generating means (16) for generating information relating to retransmission of the received block in accordance with a result of error detection by said error detecting means; and
packet recovering means (18) for recovering the data packet by combining a plurality of received blocks.

10. A communication system comprising a transmitter (1) and a receiver (2), said transmitter comprising:
packet disassembly means (10) for disassembling a transmission data packet into a plurality of blocks;
error detection code attaching means (11) for attaching an error detection code to each of the blocks; and
transmitting means (13) for transmitting the blocks having the error detection code attached and re-transmitting designated blocks designated by retransmission information from an outside source, and said receiver comprising:
receiving means (15) receiving blocks produced by disassembling a data packet;
error detecting means (17) for detecting an error in the received block;
retransmission information generating means (19) for generating information relating to retransmission of the received block in accordance with a result of error detection by said error detecting means; and
packet recovering means (18) for recovering the data packet by combining a plurality of received blocks.
